Europäisches Patentamt

European Patent Office

Office européen des brevets

(11) Veröffentlichungsnummer: **0 130 528**
**B1**

# EUROPÄISCHE PATENTSCHRIFT

(45) Veröffentlichungstag der Patentschrift:
11.05.88

(51) Int. Cl.⁴: **B 60 H 1/00**

(21) Anmeldenummer: **84107295.2**

(22) Anmeldetag: **26.06.84**

(54) Heiz- und/oder Klimaanlage für Kraftfahrzeuge.

(30) Priorität: **30.06.83 DE 3323568**

(43) Veröffentlichungstag der Anmeldung:
**09.01.85 Patentblatt 85/2**

(45) Bekanntmachung des Hinweises auf die Patenterteilung:
**11.05.88 Patentblatt 88/19**

(84) Benannte Vertragsstaaten:
**DE FR GB IT SE**

(56) Entgegenhaltungen:
**US - A - 2 791 670**
**US - A - 4 337 821**

**PATENTS ABSTRACTS OF JAPAN, Band 8, Nr. 47
(M-280)[1484], 2. März 1984; & JP-A-58 202 108
(MITSUBISHI JUKOGYO K.K.) 25-11-1983
idem
AUTOMOTIVE ENGINEERING, Band 83, Nr. 4, April 1975,
Seiten 10-12, New York, US; D. SCOTT: "Rolls-royce air
conditioner has independent, automatic two-level
control"**

(73) Patentinhaber: **BAYERISCHE MOTOREN WERKE
Aktiengesellschaft, Postfach 40 02 40 Petuelring 130 -
AJ-36, D-8000 München 40 (DE)**

(72) Erfinder: **Dorsch, Werner, Ing.-grad, Maisacher
Strasse 21, D-8031 Gerlinden (DE)**

(74) Vertreter: **Bullwein, Fritz, Bayerische Motoren Werke
Aktiengesellschaft
Postfach 40 02 40 Petuelring 130 AJ-33,
D-8000 München 40 (DE)**

## Beschreibung

Die Erfindung bezieht sich auf eine Heiz- und/ oder Klimaanlage für Kraftfahrzeuge, mit einem Temperaturfühler im Kopfraum und einem Temperaturfühler im Fussraum als Bestandteile einer Innenraumtemperatur-Regeleinrichtung.

Aus «Automotive Engineering, April 1975, S. 10ff.» ist es bekannt, diese beiden Temperaturfühler zusammen mit einem Solarfühler und einem Aussentemperaturfühler auf die Regeleinrichtung zu schalten. Über die spezielle Ausführung dieser Schaltung finden sich jedoch nur insoweit Angaben, als die Ausgangssignale dieser Fühler elektronisch verarbeitet werden sollen. Ohne besondere Massnahmen ist dies jedoch nur mit einem erheblichen Aufwand möglich.

Der Erfindung liegt die Aufgabe zugrunde, eine Heiz- und/oder Klimaanlage der eingangs genannten Art zu schaffen, die mit geringem Aufwand sowohl hinsichtlich der Zahl der Fühler als auch hinsichtlich der Verarbeitung der Fühlersignale die Temperatur des Innenraums auf den gewünschten bzw. erforderlichen Wert einstellt.

Die Erfindung löst diese Aufgabe dadurch, dass die Temperaturfühler abhängig von der Temperatur des Aussenraums derart auf die Regeleinrichtung geschaltet sind, dass bei niedrigen bzw. hohen Aussentemperaturen der Einfluss des Fussraum-Temperaturfühlers bzw. Kopfraum-Temperaturfühlers auf die Regeleinrichtung dominiert.

Die Erfindung beruht auf verschiedenen Überlegungen. So ist zum einen bei extremen Aussentemperaturen jeweils einer der beiden Temperaturfühler praktisch ohne Bedeutung. Es handelt sich bei tiefen Aussentemperaturen um den Temperaturfühler im Kopfraum und bei hohen Aussentemperaturen um den im Fussraum. Ursache hierfür ist die sich bei derartigen Aussentemperaturen in den jeweils anderen Bereichen des Innenraums von selbst, d.h. ohne Heiz- und/oder Klimaanlage ergebenden Temperaturen, die denen des Aussenraums ähnlich sind und erheblich von der gewünschten Innenraum-Temperatur abweichen. Hinzu kommt, dass durch das temperaturbedingte Verhalten der in den Innenraum strömenden Luft gerade diese Temperaturfühler unverhältnismässig stark mit der in ihrer Temperatur veränderten Luft in Berührung kommen. So sinkt die abgekühlte Luft (im Klimabetrieb) in den Fussraum, während die erwärmte Luft (im Heizbetrieb) in den Kopfraum steigt. Demgegenüber liefern die jeweils verbleibenden Temperaturfühler unter diesen extremen Bedingungen eine relativ gute Aussage über diese Temperatur des Innenraums.

Zum anderen ist die Verwendung eines Aussentemperaturfühlers nicht erforderlich. Ein von der Aussentemperatur abhängiges Signal kann nämlich auch auf andere Weise gewonnen werden. So kann beispielsweise ein im Kraftfahrzeug ohnehin vorhandener Temperaturfühler für eine Betriebsflüssigkeit, wie beispielsweise die Kühlflüssigkeit, nach längerem Ruhezustand des Kraftfahrzeugs und zu Beginn einer Fahrt ebenfalls eine Angabe über die Aussentemperatur liefern. Ferner kann die Aussentemperatur auch aus dem Temperatur-Änderungsverhalten der dem Innenraum zugeführten, zumindest teilweise erwärmten Luft bestimmt werden.

Die Realisierung der Erfindung ist auf verschiedene Weise möglich. Eine schaltungstechnisch besonders einfache Variante besteht darin, bei Klimabetrieb, d.h. hohen Aussentemperaturen, allein den Kopfraum-Temperaturfühler und bei Heizbetrieb, d.h. niedrigen Aussentemperaturen, allein den Fussraum-Temperaturfühler einzuschalten. Zwischen den beiden Temperaturfühlern kann schaltungstechnisch besonders einfach bei einer definierten Aussentemperatur umgeschaltet werden. Demgegenüber lässt sich die Wirksamkeit der Innenraumtemperatur-Regeleinrichtung noch weiter verbessern, wenn die beiden Fühler gestuft oder gleitend in Abhängigkeit von der Aussentemperatur zwischen ihrem voll wirksamen und ihrem unwirksamen Zustand eingeschaltet sind. Die zunehmende Einschaltung des einen Fühlers erfolgt «auf Kosten» des anderen Fühlers, der in entsprechender Weise zunehmend ausgeblendet wird. Diese komplementäre Schaltung der beiden Fühler hat dieselbe Wirkung wie ein einziger Innenraum-Temperaturfühler, der entsprechend der Aussentemperatur in seiner Höhe innerhalb des Innenraums veränderlich ist. Für jede Aussentemperatur «sitzt» dieser Temperaturfühler dann in der richtigen Höhe.

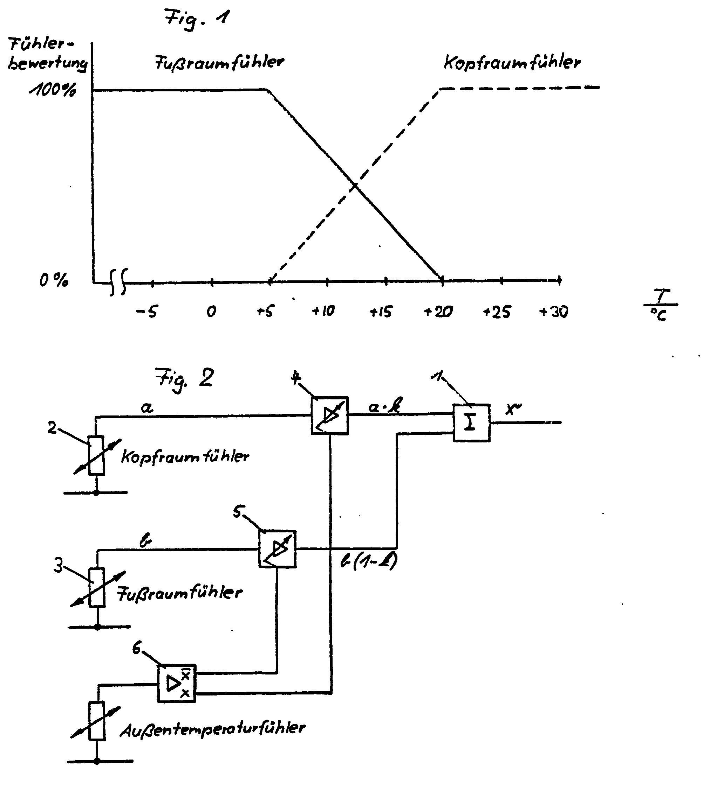

Die Erfindung ist anhand eines Diagramms in Fig. 1 bzw. einer schematisch dargestellten Schaltungsanordnung in Fig. 2 weiter erläutert.

Das Diagramm von Fig. 1 zeigt den Einfluss zweier Temperaturfühler im Innenraum eines Kraftfahrzeugs auf eine Innenraumtemperatur-Regeleinrichtung. Die beiden Temperaturfühler sitzen im Kopfraum bzw. im Fussraum des Kraftfahrzeugs. Bei niedrigen Aussentemperaturen von maximal +5°C soll allein der Temperaturfühler im Fussraum und bei relativ hohen Aussentemperaturen von über 20°C soll allein der Kopfraum-Temperaturfühler wirksam sein. Im Übergangsbereich, d.h. hier zwischen +5 und +20°C, soll der Temperaturfühler im Fussraum gleitend aus- und der Temperaturfühler im Kopfraum gleitend eingeblendet werden.

Diese Wirkung wird in Fig. 1 durch die Darstellung der Bewertung der Ausgangssignale der beiden Temperaturfühler in Abhängigkeit von der Aussentemperatur gezeigt. Die Bewertung erfolgt für beide Temperaturfühler zwischen 0 und 100%. Für den Fussraum-Temperaturfühler besitzt sie für Temperaturen von kleiner oder gleich +5°C einen Wert von 100%, um dann im Übergangsbereich auf den Wert 0 abzusinken. Für Temperaturen über 20°C bleibt die Bewertung dann bei diesem Wert. Komplementär hierzu erfolgt die Bewertung des Fussraum-Temperaturfühlers. Sie ist für Temperaturen unter 5°C gleich dem Wert 0, steigt dann kontinuierlich auf 100% bei 20°C an und bleibt über +20°C auf diesem Wert.

Schaltungsmässig lässt sich diese Bewertung in der Weise realisieren, wie sie in Fig. 2 schematisch dargestellt ist. Auf eine nicht dargestellte Innenraumtemperatur-Regeleinrichtung, wie sie beispielsweise in Verbindung mit einem einzigen Innenraum-Temperaturfühler serienmässig verwendet wird, ist das Ausgangssignal eines Summierglieds 1 geführt. Auf dieses sind die Ausgangssignale eines Temperaturfühlers 2 bzw. 3 über einen Verstärker 4 bzw. 5 geführt. Die Temperaturfühler 2 bzw. 3 sitzen im Kopfraum bzw. im Fussraum des Kraftfahrzeugs. Die Verstärker 4 bzw. 5 werden komplementär und in Abhängigkeit von der Aussentemperatur gesteuert. Hierzu dient ein weiterer Verstärker 6, dessen Ausgänge X bzw. X̄ den Verstärkungsfaktor der Verstärker 4 bzw. 5 bestimmen und auf den das Aussensignal eines Aussentemperaturfühlers geschaltet ist. Anstelle dieses Fühlers kann auch eine andere, die Aussentemperatur repräsentierende Bezugsgrösse den Verstärker 6 steuern.

Das Ausgangssignal a des Temperaturfühlers 2 erfährt im Übergangsbereich (Fig. 1) durch den Verstärker 4 eine Bewertung k und gelangt als Signal a · k zum Summierglied 1. Der Bewertungsfaktor liegt zwischen den Werten von 0 und 1. Das Ausgangssignal b des Temperaturfühlers 3 wird durch den Verstärker 5 komplementär hierzu bewertet und gelangt als Signal b · (1 − k) zum Summierglied 1. Das dort gebildete Signal x genügt dann der Beziehung a · k + b · (1 − k). Ausserhalb des Übergangsbereichs ist jeweils nur einer der beiden Temperaturfühler wirksam geschaltet. Dies lässt sich auf einfache Weise durch eine – nicht dargestellte – Aufschaltung der Ausgangssignale a bzw. b im Temperaturbereich bis 5° bzw. über 20°C anstelle des Signals x auf die Regeleinrichtung erreichen.

Auf diese Weise wird es möglich, zu jeder Aussentemperatur der Innenraumtemperatur-Regeleinrichtung eine präzise Aussage über die Temperatur im Innenraum zu liefern. Dadurch kann die Arbeitsweise der Regeleinrichtung optimiert werden. Durch das Vermeiden von Betriebsformen der Heiz- und/oder Klimaanlage, die den tatsächlichen Bedürfnissen der Fahrzeuginsassen nicht angepasst sind, lässt sich die Behaglichkeit im Innenraum steigern.

**Patentansprüche**

1. Heiz- und/oder Klimaanlage für Kraftfahrzeuge, mit einem Temperaturfühler (2) im Kopfraum und einem Temperaturfühler (3) im Fussraum als Bestandteile einer Innenraumtemperatur-Regeleinrichtung, dadurch gekennzeichnet, dass die Temperaturfühler (2, 3) abhängig von der Temperatur des Aussenraums derart auf die Regeleinrichtung geschaltet sind, dass bei niedrigen bzw. bei hohen Aussentemperaturen der Einfluss des Fussraum-Temperaturfühlers (3) bzw. des Kopfraum-Temperaturfühler (2) auf die Regeleinrichtung dominiert.

2. Anlage nach Anspruch 1, dadurch gekennzeichnet, dass bei niedrigen Aussentemperaturen allein der Fussraum-Temperaturfühler (3) und bei hohen Aussentemperaturen allein der Kopfraum-Temperaturfühler (2) eingeschaltet sind.

3. Anlage nach Anspruch 1 oder 2, dadurch gekennzeichnet, dass die beiden Temperaturfühler (2, 3) stets komplementär wirksam geschaltet sind.

4. Anlage nach Anspruch 3, dadurch gekennzeichnet, dass in einem Übergangsbereich der Aussentemperatur die Ausgangssignale der beiden Temperaturfühler (2, 3) komplementär bewertet und über ein Summierglied (1) der Regeleinrichtung zugeführt sind.

**Claims**

1. A heating- and/or air conditionig installation for motor vehicles, with a temperature sensor (2) in the head space and a temperature sensor (3) in the foot space as components of an interior temperature-regulating device, characterised in that the temperature sensors (2, 3) are switched to the regulating device in a manner dependent on the temperature of the exterior such that, in the case of low or, respectively, high external temperatures, the influence of the foot space temperature sensor (3) or, respectively, of the head space temperature sensor (2) dominates over the regulating device.

2. An installation according to Claim 1, characterised in that, in the case of low external temperatures, only the foot space temperature sensor (3) is connected in and, in the case of high external temperatures, only the head space temperature sensor (2) is connected in.

3. An installation according to Claim 1 or 2, characterised in that the two temperature sensors (2, 3) are always connected so as to be effective in a complementary manner.

4. An installation according to Claim 3, characterised in that, in a transition range of the external temperature, the output signals of the two temperature sensors (2, 3) are evaluated in a complementary manner and are passed to the regulating device via a summing element (1).

**Revendications**

1. Installation de chauffage et/ou de climatisation pour véhicules automobiles, comportant un détecteur de température (2) dans l'espace de tête et un détecteur de température (3) dans l'espace de pied, comme parties constituantes d'une installation de régulation de la température de l'espace intérieur, caractérisée en ce que les détecteurs de température (2, 3) sont reliés à l'appareil de réglage en fonction de la température de l'espace extérieur, de façon telle qu'aux basses, ou aux hautes températures extérieures, l'influence du détecteur de la température (3) de l'espace de pied, ou celle du détecteur (2) de température de l'espace de tête, domine sur l'appareil de réglage.

2. Installation suivant la revendication 1, caractérisée en ce qu'aux températures extérieures basses, seul le détecteur de température (3) de l'espace de pied est mis en service, et aux températures extérieures élevées, seul le détecteur (2) de température de l'espace de tête est mis en service.

3. Installation suivant l'une des revendications 1 ou 2, caractérisée en ce que les deux détecteurs (2, 3) de température sont toujours reliés efficacement d'une façon complémentaire.

4. Installation suivant la revendication 3, caractérisée en ce que, dans une zone de transition de la température extérieure, les signaux de sortie des deux détecteurs (2, 3) de température sont évalués complémentairement, et sont envoyés à l'appareil de réglage en passant par un additionneur (1).

## Fig. 1

Fühler-bewertung

100 %

Fußraumfühler

Kopfraumfühler

0 %

−5   0   +5   +10   +15   +20   +25   +30

$\dfrac{T}{°C}$

## Fig. 2

2   Kopfraumfühler

a

4

$a \cdot \ell$

1

$\mathrm{I}$

$x^{\sim}$

$\ell$

5

3   Fußraumfühler

$\ell(1-\ell)$

6

$\triangleright\,^{\bar{x}}_{x}$

Außentemperaturfühler